# EUROPEAN PATENT APPLICATION

(11) **EP 0 748 028 A1**
(43) Date of publication of application: **11.12.1996**
(21) Application number: 96109067.7
(22) Date of filing: 05.06.1996
(51) Int. Cl.: H02K 3/18, H02K 19/22

(54) **Alternator for vehicles with SiC switching transistors**

(30) Priority: 06.06.1995 JP 139520/95
(71) Applicant: NIPPONDENSO CO., LTD., Kariya-city Aichi-pref., 448 (JP)
(72) Inventor: Atsushi, Umeda, Kariya-city, Aichi-pref. 448 (JP); Makoto, Taniguchi, Kariya-city, Aichi-pref. 448 (JP); Shin, Kusase, Kariya-city, Aichi-pref. 448 (JP)
(74) Representative: KUHNEN, WACKER & PARTNER

(57) **Abstract**

In an alternator, a stator core (21) faces an outer periphery of a rotor (1) and has plural projected teeth (211) placed with a predetermined interval therebetween in a circumferential direction. Stator coils (22) are wound around the respective teeth (211) such that an outer rounded surface is in contact with the inner rounded surface of the stator core (21). MOS type transistor circuit made of a SiC material is mounted on a frame to which heat form the stator core (21) is transferred for charging a battery through currents of the stator coils (22) by turning into conducting only when an AC voltage generated at the stator coils (22) exceeds a battery voltage.

## Description

### BACKGROUND OF THE INVENTION

### 1. Field of the Invention:

This invention relates to an alternator for vehicles designed to produce high power by improved cooling performance, as well as to be made compact. The application of the alternator may be made to not only a normal alternator driven by an engine but also an alternator for regenerative electric power generation during a vehicle braking or a vehicle drive motor performing a regenerative electric power generation.

### 2. Description of Related Art:

It has been sought to improve the electric power generation efficiency of alternators with a background of demands for vehicles high fuel mileage these days. As one means to improve the electric power generation efficiency, it has been thought to make higher output alternators by promoting heat radiation from stator coils.

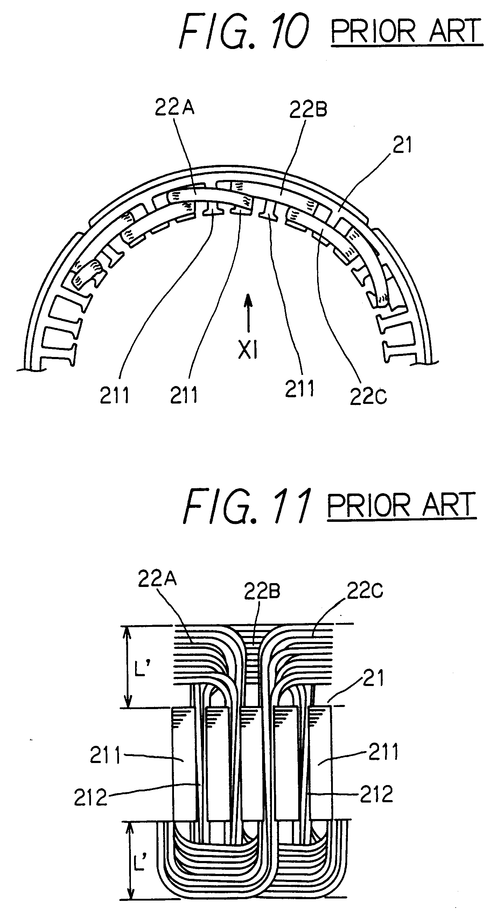

Fig. 10 shows a conventional example of so-called stator coils with a winding wound around full sections. A stator core 21 in a ring shape (the figure shows only an upper half) is formed with plural teeth 211 projecting from the inner rounded surface of the core placed with a constant space therebetween in the circumferential direction of the inner rounded surface. Three-phase stator coils 22A, 22B, 22C are alternatively turned and wound by being passed through slots 212 (Fig. 11) located between the teeth 211. The coil ends of the coils are overlapped and projected from the stator core 21 by a length L' in the axial direction on both sides.

With this structure, however, since only about a half of the outer rounded surfaces of the topmost layer (for example, 22B in Fig. 10) and the intermediate layer (for example, 22A in Fig. 10) is in contact with the inner rounded surface of the stator core 21, the contact area on the outer rounded surface of the stator core is merely about 50 % of the entire outer rounded surface of the stator coils, so that it could not guarantee adequate heat radiation.

For example, in Japanese Unexamined Patent Publication, No. Hei 6-141497, stator coils with respective windings wound around short sections has been proposed in which the entire outer rounded surface of the stator coils are in contact with the inner rounded surface of the stator core to promote the heat radiation of the stator coils.

Although the structure in this Publication in which the entire outer rounded surface of the stator coils is in contact with the stator core, surely promotes the heat radiation of the coils, a large amount of heat is transferred to an alternator frame formed with the stator core. A rectifier (switching means for rectification) normally attached to the alternator is therefore required to promote heat radiation thereof, and therefore, heat radiating fins for the rectifier tend to be made larger. This leads that cooling air intake openings arranged in the frame is made less open, thereby generally rendering difficult a substantial opening area to be sufficiently guaranteed, and that, regarding the entire alternator, the cooling ability is rather impaired as well as alternators size is increased.

### SUMMARY OF THE INVENTION

This invention is to solve such problems and has an object to provide an alternator for vehicles to realize a high power output by promoting heat radiation from a stator core and to realize an improved entire cooling efficiency and a more compact size thereof.

According to the present invention, in an alternator having a rotor with a field coil, stator core with stator coils, a frame for the startor core and a rectifying switching circuit, the switching circuit is formed on and in thermal contact with the frame, constituted of MOS type transistors made of a SiC material, for charging a battery by converting an AC voltage generated by the stator coils to a DC voltage.

The heat generated at the stator coils is effectively radiated to the stator core with which the stator coils are in contact. Though the heat is transferred to the switching circuit for rectification formed on the frame, the temperature of the entire body will be less increased even in receiving heat from the stator core, because the on-resistance of the MOS type transistors made of the SiC material sufficiently smaller than that of the conventional MOS type transistor or diode made of the Si material. Accordingly, the form of such as radiating fins arranged on the switching circuit can be made smaller, and therefore, the entire size of the alternator can be made compact.

In conjunction with that the switching circuit is made smaller on the frame, an effective opening area of the cooling air intake opening formed in the frame can be guaranteed sufficiently, thereby improving the cooling efficiency in the alternator.

Preferably, the stator coils are in three phases, and the MOS type transistors are in a form of three pairs in which each transistor is connected in series. The three pairs are connected in parallel between terminals of the battery. The stator coils of each phase is connected to a connecting point between the MOS type transistors forming one of the pairs.

Thus, it is realized to make high power output by improving the cooling ability and to make the alternator size compact.

More preferably, the three-phase stator coils have a winding pitch of an electrical angle of 2π/3.

The 2π/3 pitch winding eliminates the overlap at the coil ends. The stator coil of each phase can be individually wound at the respective teeth, thereby shortening the coil length, and thereby reducing the resistance of the coil to suppress the heat generation.

### BRIEF DESCRIPTION OF THE DRAWINGS

Other features and advantages of the present invention will become more apparent from the following description when read in conjunction with the accompanying drawings, in which:
Fig. 1 is a side view with a half cross section of an alternator according to an embodiment of the invention;
Fig. 2 is an enlarged partial front view of a stator according to the embodiment of the invention;
Fig. 3 is an enlarged partial view of an inner rounded surface of the stator core according to the embodiment of the invention, and also, a view when seen along an arrow III in Fig. 2;
Fig. 4 is an electrical circuit diagram of the alternator according to the embodiment of the invention;
Fig. 5 is a cross sectional view of a MOS type transistor according to the embodiment of the invention;
Fig. 6 is a graph showing Vds-Id curve of the MOS type transistor according to the embodiment of the invention;
Fig. 7 is a graph showing breakdown voltage vs. on-resistance rate of SiC-MOS type transistor according to the embodiment of the invention;
Fig. 8 is a graph showing changes in intake air amount according to the embodiment of the invention;
Fig. 9 is an enlarged partial front view of a stator according to another embodiment of the invention;
Fig. 10 is a half front view of a stator according to a prior art; and
Fig. 11 is an enlarged partial view of an inner rounded surface of a stator core accordingto the prior art, and also, a view when seen along an arrow XI in Fig. 10.

### DETAILED DESCRIPTION OF THE PRESENTLY PREFERRED EMBODIMENTS

Hereinafter, the present invention is described in detail with reference to embodiments shown in the drawings.

### (First Embodiment)

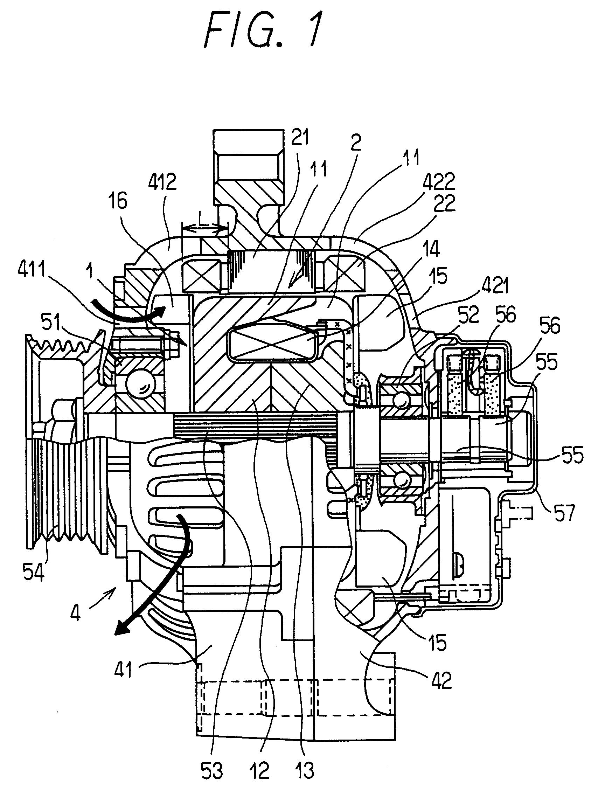

Fig. 1 shows a vertical cross section of an alternator in entirety. A frame 4 of the alternator is constituted by a drive frame 41 in a half-container-shape and a rear frame 42 by combining them. A shaft 53 is arranged at the center of the frame 4 in being supported in bearings 51, 52 and is rotated by engine power provided through a pulley 54 attached to a front end (left end in the figure).

A Lundell type rotor core is secured to the shaft 53; the rotor core is made by combining a front core 12 and a rear core 13. A rotor coil 14 is wound around the Lundell type rotor core. Lundell type claw pole members 11 are curved and projected alternatively from the respective front and rear cores 12, 13 in covering the outer periphery side (upper side in the figure) of the rotor coil 14. Magnetic field of different polarities alternatively emerges at those claw pole members 11 according to excitement of the rotor coil 14.

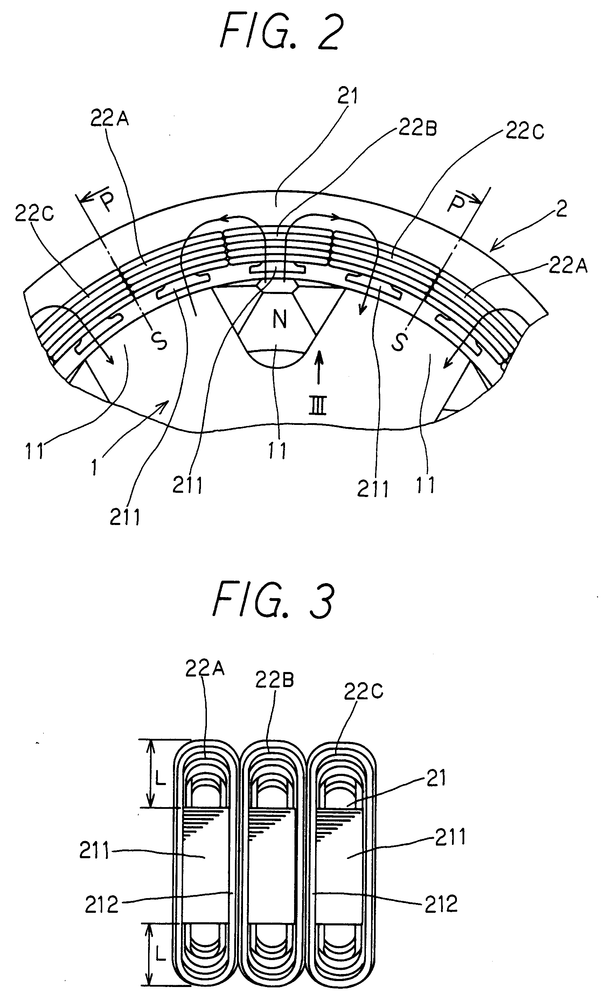

A stator 2 installing a stator core 21 is provided close to the outer rounded surface of a rotor 1. The stator core 21 is in a ring shape (Fig. 2 shows a part thereof.); plural teeth 211 are so arranged to project from the inner rounded surface of the stator core with a constant space therebetween in a circumferential direction of the inner rounded surface; three-phase stator coils 22A, 22B, 22C are alternatively wounded around the teeth 211 through slots 212 (Fig. 3) among the teeth 211.

Each stator coil 22A, 22B, 22C is angled of 2π/3 electric angle per two magnetic pole pitch, is wound around the respective teeth in a rectangular shape having straight longer sides extending in the slots 212, and is not overlapped in a radial direction with adjacent coils. The entire outer rounded surfaces of the respective stator coils 22A to 22C are in contact with the inner rounded surface of the stator core 21. The occupancy rate in the slots 212 of the coils 22A to 22C is about 52 %, so that the contact area with the stator core 21 is increased 25% relative to the conventional art.

It is to be noted that the coil ends are projected from the stator core 21 in the axial direction on both sides by a shorter length L than the conventional length L' (Fig. 11).

Arrows in Fig. 2 show magnetic force lines coming out of the respective magnetic pole core 11 of the rotor 1; magnetic flux developed by the respective magnetic pole core 11 intersects the respective phase stator coils 22A to 22C upon rotation of the rotor 1, thereby generating AC voltage at those coils. When the stator coils 22A to 22C begin to generate electric power, the generated current is fed to a battery through a full-wave rectifier described below. During supply of this current, the stator coils 22A to 22C produce heat.

In this situation, since the respective stator coils 22A to 22C are in contact with the inner rounded surface of the stator core 21 by the entire outer rounded surfaces thereof, the heat of the stator coils 22A to 22C is effectively dissipated to the stator core 21, thereby preventing the coil temperature from rising.

In Fig. 1, wind generating fans 15, 16 are formed at outer peripheries of front and rear ends of the rotor 1 and introduce, as the rotor 1 rotates, external air (arrows in the figure) through plural intake openings 411, 421 provided in the front face of the drive frame 41 and the rear face of the rear frame 42. After cooling the rotor coil 14, the stator coil 22, a voltage regulator including switching means for rectification as described below, and the like, the introduced external air is discharged through plural discharge openings 412, 422 provided in the outer circumferences of the respective frames 41, 42, respectively.

Slip rings 55 are formed at the rear end outer periphery of the shaft 53 projecting from the rear frame 42 for supplying electricity to the rotor coil 14 and are in contact with brushes 56. A cover 57 is so formed to cover the rear end of the shaft 53, and within the cover 57, the voltage regulator including the switching means for rectification as described below in detail is contained.

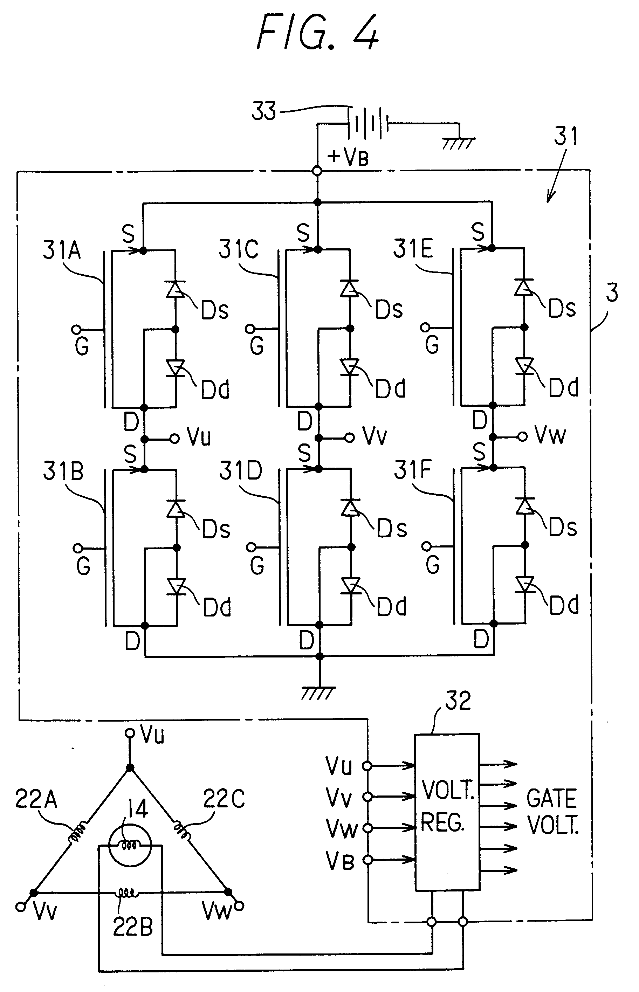

Fig. 4 shows an electric circuit diagram of the alternator for charging a battery 33. A voltage regulating portion 32 in the voltage regulator 3 reads the voltage of the battery 33 and makes the voltage constant by switching on and off the current flow to the rotor coil 14.

Output end voltages Vv, Vu, Vw of the three-phase stator coils 22A, 22B, 22C connected in a delta configuration are fed to respective connecting points of three pairs of MOS type transistors 31A to 31F constituting the switching means for rectification and are also fed to the voltage regulating portion 32.

That is, in the respective transistors, the drains D of the transistors 31A, 31C, 31E on the high side and the sources S of the transistors 31B, 31D, 31F on the low side are connected with each other; the sources S of the transistors 31A, 31C, 31E on the high side are connected to the high voltage end of the battery 33; the drains D of the transistors 31B, 31D, 31F on the low side are connected to the lower voltage end of the battery 33. The respective transistors 31A to 31F are controlled to be turned on and off by gate voltages fed from the voltage regulating portion 32 to the gates G.

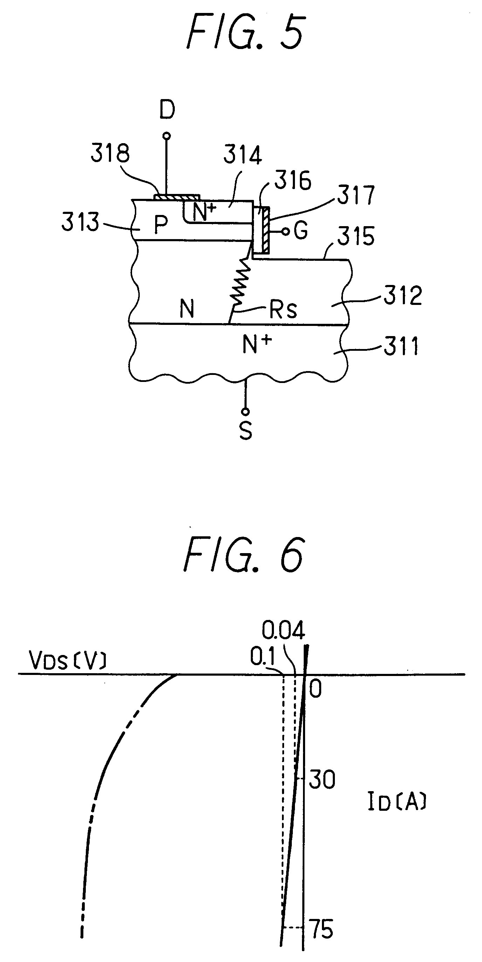

The structures of the respective MOS type transistors 31A to 31F are the same; referring to Fig. 5, this will be described as follows.

In the figure, an N type anti-breakdown layer 312 is epitaxially grown on N⁺ type substrate 311 made of a SiC material; a P type well region 313 is formed on the surface of the N type anti-breakdown layer 312 by aluminum ion implantation.

An N⁺ type region 314 is formed on the P type well region 313 by nitrogen ion implantation; trench 315 is formed as to form a recess by a well-known RIE dry etching by masking the wafer surface with a resist or insulating film by opening only regions for trenches.

Then, a gate insulating film 316 made of a silicon oxide film is formed on the surface of the trench 315 by a thermal oxidation, and then, an electrode 317 made of a doped polysilicon is formed at the trench 315 to form the gate G. Then, metal electrodes 318 are contacted to the surfaces of the N⁺ type regions 314 and the P type well region 313 to form the drain D, and a metal electrode is contacted to the surface of the N⁺ type substrate 311 to form the source S.

A parasitic diode Ds on the source coupling side (Fig. 4) and a parasitic diode Dd on the drain coupling side are formed between the P type well region 313 (namely, a region directly below the gate electrode 317) and the source S and between the P type well region 313 and the drain D, respectively, but the parasitic diode Dd is short-circuited, and the parasitic diode Ds stops a reverse current from the battery 33.

Then, switching on and off control of the respective MOS type transistors 31A to 31F done by the voltage regulating portion 32 in Fig. 4 is described.

The voltage regulating portion 32 reads the output end voltages Vu, Vv, Vw of the three-phase stator coils 22A to 22C and selects a higher interline generated voltage taking a positive value among interline generated voltages Vu-Vv, Vv-Vw, Vw-Vu and higher than the terminal voltage of the battery 33.

To supply the selected interline generated voltage Vu-Vv, Vv-Vw, Vw-Vu to the battery 33, one of the transistors 31A, 31C, 31E on the high side and one of the transistors 31B, 31D, 31F on the low side are activated to conduct. By this operation, a charging current is supplied to the battery 33 from the selected three-phase stator coil 22A to 22C.

In this embodiment, as described above, the monocrystalline SiC, which is a compound of Si and C, is used as a material for the MOS type transistors, so that the thickness and impurity concentration of the N type anti-breakdown layer 312 can be significantly improved in comparison with the conventional Si (silicon).

That is, in the case of Si, the breakdown electrical field intensity is about 30 volts per micron meter. Assuming for simplicity the N type voltage withstanding layer 312 bears the breakdown voltage of 300 volts, the N type anti-breakdown layer 312 has to have the thickness of about 20 micron meters, the impurity concentration of 1 x 10¹⁵ atoms per cubic centimeters, and the resistivity of about 5 ohm-centimeter.

To the contrary, the breakdown voltage of SiC is about 400 volts per micron meter, and the N type anti-breakdown layer 312 has to have the thickness of about 4 micron meters, the impurity concentration of 2 x 10¹⁶ atoms per cubic centimeter, and the resistivity of about 1.25 ohm-centimeter.

Accordingly, the resistance of the N type anti-breakdown layer 312 of the MOS type transistor (SiC-MOS) using the SiC material can be reduced down to one twentieth (1/20) of the resistance of the N type anti-breakdown layer of the MOS type transistor (Si-MOS) made of the Si material.

As a result, the source parasitic resistance Rs in the SiC-MOS (Fig. 5) is reduced down to one twentieth (1/20) of that in Si, and according to this, the channel resistance is greatly reduced.

Fig. 6 shows Id-Vds characteristics of SiC-MOS; it is turned out that voltage drop Vds is small even where the output current Id is 75A, in comparison with the forward characteristics of a diode shown by a double dotted chain line in the figure, and that the on-resistance is small.

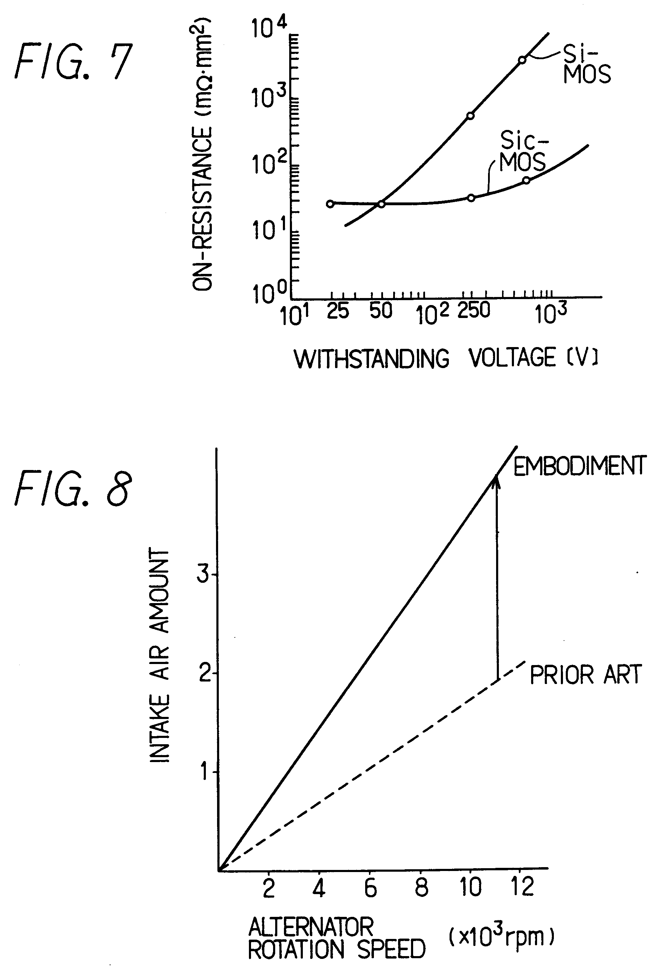

Fig. 7 shows a calculated example of the on-resistance rate when the demanded breakdown voltage for the MOS transistor is changed. It is to be noted that the on-resistance rate is the summation of the channel resistance and the resistance Rs of the N type anti-breakdown layer 312 (Fig. 5). Though the channel resistance may be shifted depending on various factors, as apparent from the figure, the resistance of the N type anti-breakdown layer 312 is controlling in a high breakdown voltage region, so that the channel resistance itself may hardly change even if the breakdown voltage is increased.

Accordingly, in the case of the Si-MOS, the on-resistance rate proportionally increases as the breakdown voltage increases from the breakdown voltage of around 25 volts; in the case of the SiC-MOS, an increment of the resistance of the N type anti-breakdown layer 312 can be almost neglected up to the breakdown voltage of 250 volts, and then the on-resistance gradually increases as the voltage exceeds the breakdown voltage of 250 volts.

Thus, the on-resistance of the SiC-MOS, while a sufficient breakdown voltage is guaranteed against a high voltage applied during a disconnected period, can be sufficiently reduced (about 1/20) even when a large current (about 75A) flows, so that the heat amount during the current flow can be greatly reduced.

Accordingly, as described above, even if the heat from the stator coils 22A to 22C is transferred to the stator core 21 and further to the voltage regulator on the frame 4, the increment of the temperature is grossly small in comparison with a conventional rectifier, because the heat generation of the rectifier made of the SiC-MOS 31A to 31F formed in the voltage regulator is about 1/20 and very small in comparison with the Si-MOS.

This leads that the cooling fins of the rectifier can be made smaller, and that an exciting current controller that so far has been separately assembled can be built in a united body, thereby allowing the voltage regulator to be compact. If electrical parts are made compact, the effective opening area of the intake openings 421 is widened in the rear frame 42 (Fig. 1), thereby allowing a large amount of cooling air to be supplied to the stator coils 22 and the like, and thereby improving the cooling ability in a sense of the entire alternator.

In particular, in this embodiment, the 2π/3 pitch winding avoiding overlap at the coil ends is used, and since the windings can be easily contained, the projecting length L (Fig. 1) of the coil ends of the stator coils 22A to 22C can be reduced more than the prior art, thereby sufficiently guaranteeing the opened area of the discharge openings 412, 422, as well as promoting the heat radiation of the stator coils 22A to 22C by effectively flowing a large amount of cooling air introduced from the intake openings 411, 421 to the discharge openings 412, 422.

Here, Fig. 8 is for comparison of intake air amounts between a conventional alternator (a broken line in the figure) and the alternator according to the embodiment (a solid line in the figure). With the embodiment, the intake air amount can be improved 90 % to 100 % more. That is, the cooling ability of the entire alternator can be significantly improved by a synergetic effect from enhanced substantial intake opening areas by virtue of the compact-sized electric parts and from enhanced discharge openings by virtue of shortened coil end length.

### (Second Embodiment)

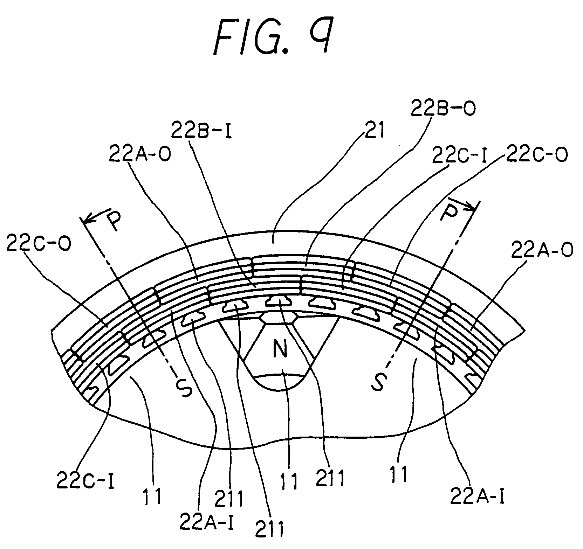

The stator coils can be constituted as shown in Fig. 9. In the figure, the stator coils are constituted by respective outer layer coils 22A-O, 22B-O, 22C-O in contact with the inner rounded surface of the stator core 21, and respective inner layer coils 22A-I, 22B-I, 22C-I in contact with inner peripheries of the outer layer coils. The respective inner and outer layer coils 22A-I to 22C-O are of an electrical angle 2π/3 per two magnetic pole pitches P and wound around the respective teeth 211, and the adjacent coils are avoided from overlapping with one another. The upper layer stator coil and the lower layer stator coil are located by being shifted from one another in the circumferential direction by a portion of a single tooth (π/3).

With such a structure, the heat is effectively dissipated from the outer layer stator coils 22A-O to 22C-O to the stator core 21 with which the entire outer peripheries of the outer layer stator coils are in contact, and also from the inner layer stator coils 22A-I to 22C-I to the outer layer stator coils 22A-O to 22C-O with which the entire outer peripheries of the inner layer stator coils are in contact.

In this embodiment, higher harmonic components contained in reactive magnetomotive force generated from the stator coils 22A-I to 22C-I, 22A-O to 22C-O are canceled, thereby reducing magnetic sound during the electric power generation.

The present invention having been described should not be limited to the abovedescribed embodiments but may be modified in many ways without departing from the spirit and scope of the invention.

## Claims

1. An alternator for vehicles comprising:
a stator core (21) facing an outer periphery of a rotor (1) and having plural projected teeth (211) placed with a predetermined interval therebetween in a circumferential direction of an inner rounded surface thereof;
poly phase stator coils (22) wound around the teeth such that at least a portion of an outer rounded surface is respectively in contact with the inner rounded surface of the stator core;
a frame (4) made of a good thermally conductive metal, fitting the stator core by at least a part of the frame and having openings for discharging cooling air heated by the stator coils; and
switching means (31) for rectification mounted on and in thermal contact with the frame for charging a battery by converting an AC voltage generated at the stator coils to a DC voltage, the switching means including MOS type transistors (31A through 31F) each being made of a compound of silicon and carbon in a form of a monocrystalline SiC which has a lower resistivity than silicon.

2. An alternator for vehicles comprising:
a stator core (21) facing an outer periphery of a rotor (1) and having plural projected teeth (211) placed with a predetermined interval therebetween in a circumferential direction of an inner rounded surface thereof;
a poly phase outer layer stator coil (22 ; 22A-O through 22C-O), wound between the teeth next to each other along an inner rounded surface of the stator core, whose outer rounded surface is in contact with the inner rounded surface of the stator core;
a poly phase inner layer stator coil (22 ; 22A-I through 22C-I) wound between the teeth next to each other at a position shifted with respect to the outer layer stator coil by one tooth in the circumferential direction and located at an inner position of the outer layer stator coil, at least a part of an outer rounded surface of the inner layer stator coil being in contact with the inner rounded surface of the outer layer stator coil; and
switching means (31) for rectification mounted on a frame transferring heat from the stator core for charging a battery by converting an AC voltage generated at the respective outer and inner layer stator coils to a DC voltage, the switching means including MOS type transistors (31A through 31F) each being made of a compound of silicon and carbon as a monocrystalline SiC which has a lower resistivity than silicon.

3. The alternator as set forth in claim 1 or 2, wherein:
the stator coil is in three phases;
the MOS type transistors are in a form of three pairs in which each transistor is connected in series and are connected in parallel between terminals of the battery; and
the stator coil of each phase is connected to a connecting point between the MOS type transistors forming one of the pairs.

4. The alternator as set forth in claim 3, wherein:
the three-phase stator coil has a winding pitch of 2π/3 in electrical angle.
